# EUROPEAN PATENT APPLICATION

(11) **EP 1 813 893 A2**
(43) Date of publication of application: **01.08.2007**
(21) Application number: 06014066.2
(22) Date of filing: 06.07.2006
(51) Int. Cl.: F25D 17/06

(54) **Supercooling apparatus, refrigerator, control method thereof**

(30) Priority: 14.01.2006 KR 20060004205
(71) Applicant: Samsung Electronics Co., Ltd., Suwon-si, Gyeonggi-Do (KR)
(72) Inventor: Shin, Young Shik, Seongnam-Si Gyeonggi-Do (KR); Lim, Chang Hak, Hwaseong-si, Gyeonggi-do (KR); Ha, Joo Young, Mapo-Gu Seoul (KR); Hahm, Kyung Hee, Seocho-Gu Seoul (KR); Kim, Yong Han, Cheonan-Si Choongnam (KR); Kim, Jeong Han, Gwonseon-Gu Suwon-Si Gyeonggi-Do (KR); Yoon, Won Jae, DongJak-Gu Seoul (KR); Lee, Jae Seung, Taean-Eub Hwaseong-Gun Gyeonggi-Do (KR); Lee, Hye Ran, Goonpo-Si Gyeonggi-Do (KR); Lim, Jung Soo, Guro-Gu Seoul (KR)
(74) Representative: Grünecker, Kinkeldey, Stockmair & Schwanhäusser Anwaltssozietät

(57) **Abstract**

A refrigerator for storing a beverage at an optimal temperature to stably supercool the beverage and maintain the beverage in a supercooled state, and that can rapidly produce a supercooled beverage while maintaining the supercooled state of the beverage. A supercooling apparatus of the refrigerator includes a storage to which chilled air is supplied from a chilled air supply unit, a supercooling compartment (200) positioned in the storage and refrigerated by the chilled air to indirectly refrigerate an object (M) therein, a hole (204) formed at one side of the supercooling compartment (200) to allow flow of the chilled air into and from the supercooling compartment (200), and a damper (250) to open or close the hole (240). The object (M) is directly or indirectly refrigerated in the supercooling compartment (200) according to user's selection by opening or closing the damper (250).

## Description

### CROSS-REFERENCE TO RELATED APPLICATIONS

This application claims the benefit of Korean Patent Application No. 2006-0004205, filed on January 14, 2006 in the Korean Intellectual Property Office, the disclosure of which is incorporated herein by reference.

### BACKGROUND OF THE INVENTION

### 1. Field of the Invention

The present invention relates to a refrigeration compartment, a refrigerator including the same, and a control method thereof. More particularly, the present invention relates to a refrigerator including an independent refrigeration compartment which can supercool a beverage and maintain a supercooled state of the beverage, and a method for controlling the refrigerator such that a variation in temperature of the refrigeration compartment is minimized to maintain the supercooled state of the beverage.

### 2. Description of the Related Art

With advances in refrigerator technology, requests for cool and tasty beverages has been initially satisfied by ice cream-type beverages, which can be produced in the manner of freezing the beverage in the refrigerator, and then recently by a slush type beverage (hereinafter referred to as a "slush beverage"), which has an intermediate phase between the beverage as a liquid phase and the ice cream as a solid phase, and can be produced by mixing the beverage and ice particles.

With a conventional refrigerator, the slush beverage is produced by mixing a desired beverage and crushed ice. However, such a slush beverage is insufficient to satisfy demands of a user due to a problem in that such a slush beverage is inconvenient to have due to a large size of ice particles, and tends to change in its flavor due to dilution of the beverage as time passes.

Thus, in view of satisfying the user's demands described above, it is necessary to provide a slush beverage which is unlikely to be diluted, and includes uniform and fine ice particles suitable to have in a slush beverage. According to a well-known technique, such a slush beverage can be produced by supercooling a beverage to its freezing point or less so as not to be in a frozen state, followed by supplying ice nuclei or by applying impact or vibration to freeze the beverage in the supercooled state.

Meanwhile, in producing such a slush beverage, it is necessary to supercool the beverage to its freezing point or less so as not to be in the frozen state, and to maintain the supercooled state of the beverage.

Generally, water undergoes a phase transition from liquid to solid, i.e., ice at a temperature of 0 °C or less at **1** atm. In some conditions, water exists in a supercooled state without undergoing the phase transition. When the water is in the supercooled state, it is relatively unstable since the water has a higher free energy than water in the solid state. Here, the term "free energy" means an amount of energy which can perform effective work as a predetermined chemical reaction continues to progress. According to the second law of thermodynamics, any thermodynamically isolated system tends to move from a higher energy state to a lower energy state over time. Thus, in terms of the free energy, the chemical reaction progresses in a direction of decreasing the free energy.

In other words, such a state wherein water is in the supercooled state without being frozen at the freezing point or less at 1 atm is thermodynamically called a meta-stable state. When the beverage is in the meta-stable state, the beverage is in neither an equilibrium state nor a completely unstable state. Thus, if there is external disturbance, the beverage instantaneously undergoes the phase transition from the supercooled state to ice which is in a more stable phase. That is, the supercooled beverage is frozen. As a result, it is very difficult to maintain the beverage in the supercooled state.

In theory, a minimum temperature of allowing pure water to be in the supercooled state without being frozen is about -40 °C. However, experience says that water is frozen at a significantly higher temperature than this theoretical temperature.

In this regard, when a temperature range of permitting water to be in the supercooled state without being frozen below a freezing point is defined as a supercooling degree, it can be understood that the supercooling degree of beverages including water is very small in practice, unlike the theoretical supercooling degree. In other words, it can be understood on the basis of experience that the temperature range enabling the beverages to be in the supercooled state is very narrow, and that the beverage is instantaneously frozen at a temperature slightly lower than the freezing point.

In the point of view as described above, it is very difficult for the conventional refrigerator to produce a slush beverage by supercooling the beverage. Specifically, every beverage has its own supercooling degree different from others due to a different content thereof, and thus it is difficult to maintain every beverage in a supercooling state. Furthermore, even if supercooling degrees of all beverages were provided, it is very difficult to maintain a supercooled state of a certain beverage having a low supercooling degree since the conventional refrigerator undergoes temperature variation in a significantly wide range due to non-uniform circulation of chilled air therein.

In addition, if the beverage could be maintained in the supercooled state, since it takes a long period of time to supercool the beverage for producing the slush beverage, a user must wait a very long time to have the slush beverage.

### SUMMARY OF THE INVENTION

Accordingly, it is an aspect of the present invention to provide a refrigerator, which can maintain a storage for a beverage at an optimal temperature to stably supercool the beverage and then maintain the beverage in a supercooled state, and which can rapidly produce a supercooled beverage while maintaining the supercooled state of the beverage after supercooling the beverage, and a control method thereof.

Additional aspects and/or advantages of the invention will be set forth in part in the description which follows and, in part, will be apparent from the description, or may be learned by practice of the invention.

In accordance with one aspect of the present invention, a supercooling apparatus is provided, including: a storage to which chilled air is supplied from a chilled air supply unit; a supercooling compartment positioned in the storage, and refrigerated by the chilled air to indirectly refrigerate an object therein; a hole formed at one side of the supercooling compartment to allow flow of the chilled air into and from the supercooling compartment; and a damper to open or close the hole, such that the object is directly or indirectly refrigerated in the supercooling compartment according to user's selection by opening or closing the damper.

The supercooling apparatus may further include a temperature sensor positioned inside the supercooling compartment to detect an inner temperature of the supercooling compartment.

The supercooling apparatus may further include a controller to operate the supercooling compartment in any one of a direct refrigeration mode, an indirect refrigeration mode and a refrigeration stop mode by controlling the damper and the chilled air supply unit based on a temperature information provided by the temperature sensor.

The supercooling compartment may be formed of a material to accumulate cold heat to maintain a constant temperature.

The chilled air supply unit may include an evaporator to generate the chilled air; and a fan to blow the chilled air generated by the evaporator to the storage.

The evaporator may include any one of an evaporator for a freezing compartment, an evaporator for a refrigerating compartment, and an independent evaporator.

In accordance with another aspect of the present invention, a refrigerator is provided, including: a body having a freezing compartment defined therein; a storage defined independently of the freezing compartment in the body; a supercooling compartment positioned in the storage to indirectly refrigerate an object therein; a chilled air supply unit to supply chilled air from the freezing compartment to the storage; a hole formed at one side of the supercooling compartment to allow flow of the chilled air into and from the supercooling compartment; and a damper to open or close the hole, such that the object is directly or indirectly refrigerated in the supercooling compartment according to user's selection by opening or closing the damper.

The refrigerator may further include a temperature sensor positioned inside the supercooling compartment to detect an inner temperature of the supercooling compartment.

The refrigerator may further include a controller to operate the supercooling compartment in any one of a direct refrigeration mode, an indirect refrigeration mode and a refrigeration stop mode by controlling the damper and the chilled air supply unit based on a temperature information provided by the temperature sensor.

The supercooling compartment may be formed of a material to accumulate cold heat to maintain a constant temperature.

The refrigerator may further include a duct to guide the chilled air from the freezing compartment to the storage.

The chilled air supply unit may include an opening and closing member to open or close the duct, and a fan to blow the chilled air from the freezing compartment to the storage.

The supercooling compartment may include a case to define a space in which the object is preserved; and a cover to open or close an opening of the case.

The hole, and the damper may be formed on the cover.

The supercooling compartment may further include a fixing member to fix the cover to one side within the storage.

The cover may slide on the opening of the case, and be disengaged from or engaged with the case when the cover is withdrawn from or pushed into the case.

The supercooling compartment may further include a sealing member provided around a lower end of the cover or on an inner surface of the opening of the case to seal the opening of the case when the cover is slidably engaged with the case.

The opening of the case may be provided at one end with a groove in which one end of the cover slidably fits, and the cover may be provided at the other end with a step corresponding to the groove of the case such that the case is closed when the cover is slidably engaged with the case.

In accordance with yet another aspect of the present invention, a refrigerator is provided, including: a body having a freezing compartment defined therein; a storage defined independently of the freezing compartment in the body; a chilled air supply unit to supply chilled air from the freezing compartment to the storage; a supercooling compartment positioned in the storage, and refrigerated by the chilled air supplied from the chilled air supply unit to indirectly refrigerate an object therein; a temperature sensor positioned inside the supercooling compartment to detect an inner temperature of the supercooling compartment; and a controller to control the chilled air supply unit based on a temperature information provided by the temperature sensor, wherein the refrigerator maintains a supercooled state of the object by reducing a range of temperature variation within the supercooling compartment via control of the chilled air supplied from the chilled air supply unit.

The supercooling compartment may be formed of a material to accumulate cold heat to maintain at a constant temperature.

The chilled air supply unit may include an evaporator to generate the chilled air; and a fan to blow the chilled air generated by the evaporator to the storage.

The evaporator may include any one of an evaporator for a freezing compartment, an evaporator for a refrigerating compartment, and an independent evaporator.

The refrigerator may further include a duct to guide the chilled air from the freezing compartment to the storage.

The chilled air supply unit may include an opening and closing member to open or close the duct, and a fan to blow the chilled air from the freezing compartment to the storage.

The supercooling compartment may include a case to define a space in which the object is preserved; and a cover to open or close an opening of the case.

In accordance with yet another aspect of the present invention, a method for controlling a refrigerator is provided, including: detecting a temperature T in a supercooling compartment; comparing the temperature T with at least one of a first preset temperature Tset1 set as a temperature of starting indirect refrigeration of an object after direct refrigeration, and with a second preset temperature Tset2 set as a target temperature; and controlling a chilled air supply unit acting to supply chilled air to a storage in which the supercooling compartment is provided, and a damper acting to adjust flow of the chilled air from the storage to the supercooling compartment according to the temperature T in the supercooling compartment, such that the direct refrigeration or the indirect refrigeration of the object within the supercooling compartment is selectively performed.

If it is determined at the comparing operation that the temperature T is greater than or equal to the first preset temperature Tset1, the controlling operation may be performed to operate the chilled air supply unit while opening the damper.

If it is determined at the comparing operation that the temperature T is in the range of Tset1 ~ Tset2, the controlling operation may be performed to operate the chilled air supply unit while closing the damper.

If it is determined at the comparing operation that the temperature T is less than the second preset temperature Tset2, the controlling operation may be performed to stop the chilled air supply unit while closing the damper.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a conceptual diagram illustrating characteristics of a supercooling apparatus in accordance with the present invention;
FIG. 2 is a perspective view illustrating one example of a refrigerator which includes the supercooling apparatus in accordance with the present invention;
FIGS. 3 to 5 are side views illustrating first, second and third embodiments of a main component of the refrigerator in accordance with the present invention, respectively;
FIG. 6 is a block diagram illustrating a control system of the refrigerator in accordance with the present invention shown in FIGS. 3 to 5;
FIG. 7 is a perspective view illustrating another example of a refrigerator in accordance with the present invention;
FIGS. 8 to 10 are side views illustrating fourth, fifth and sixth embodiments of a main component of the refrigerator in accordance with the present invention shown in FIG. 7, respectively; and
FIG. 11 is a flow diagram illustrating a method for controlling a refrigerator in accordance with the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

When producing a supercooled beverage for a slush beverage, it is necessary to supercool an object, that is, a beverage, not to be frozen at its freezing point or less, and to maintain the supercooled state of the object. In order to maintain the supercooled state of the object, it is important in terms of temperature to reduce the range of temperature variation, and in terms of disturbance to reduce vibration or impact applied to the object.

The present invention relates to an apparatus to maintain the supercooled state of the object in terms of temperature, and, specifically to an apparatus which can very stably maintain the supercooled state of the object in terms of temperature while supercooling the object very rapidly.

Since every beverage has its own supercooling degree, it is necessary to find a temperature at which the beverage starts changing from a supercooled state to a frozen state, i.e., a critical supercooling temperature, based on probability via testing.

According to a result of the test using beverages such as carbonated drinks, coffee, juice, and the like, which are generally refrigerated to drink, the critical supercooling temperature of the beverages is in the range of about -8 - -12 °C. Thus, in order to maintain the supercooled state of the beverages, it is necessary to maintain a temperature of about -7 °C. However, since every beverage has its own supercooling degree different from others, this temperature cannot be applied to all beverages, and thus a temperature range to allow a certain beverage to have its own supercooling degree can be different from others. What is important is, since the beverages generally have a low supercooling degree, in other words, since the beverages have a narrow temperature range to allow the beverages in the supercooled state, it is necessary to have a small temperature variation upon refrigeration.

The present invention is characterized in that direct refrigeration is performed for a predetermined period of time, until a predetermined temperature is reached, by directly supplying chilled air having a lower temperature than a target temperature in order to rapidly supercool an object while maintaining the supercooled state of the object, and is then converted to an indirect refrigeration in order to prevent the object from being frozen at the predetermined temperature by allowing the supercooled state of the object to be maintained. Herein, the temperature preset as the temperature of the object when the direct refrigeration of the object is converted to the indirect refrigeration thereof will be defined as a first preset temperature, and the temperature preset as the target temperature to maintain the beverage in the supercooled state will be defined as a second preset temperature. Preferably, the first preset temperature is about 0 °C, and the second preset temperature is about -7 °C, when considering that the second preset temperature is the target temperature.

Reference will now be made in detail to the embodiments of the present invention, examples of which are illustrated in the accompanying drawings. The embodiments are described below to explain the invention by referring to the figures.

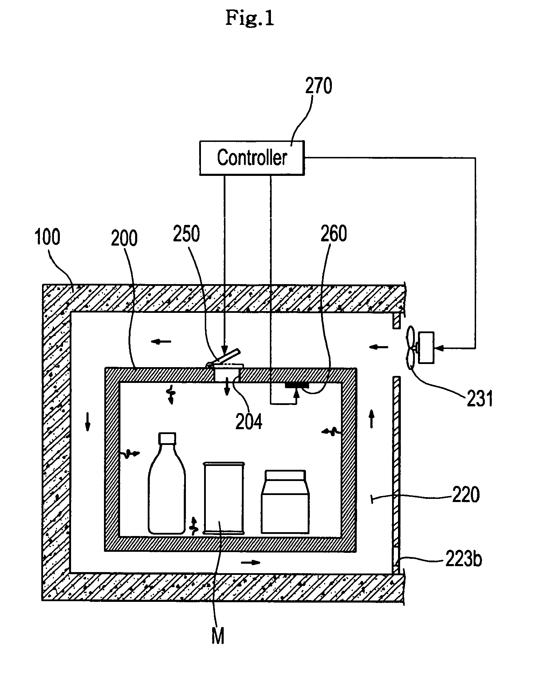

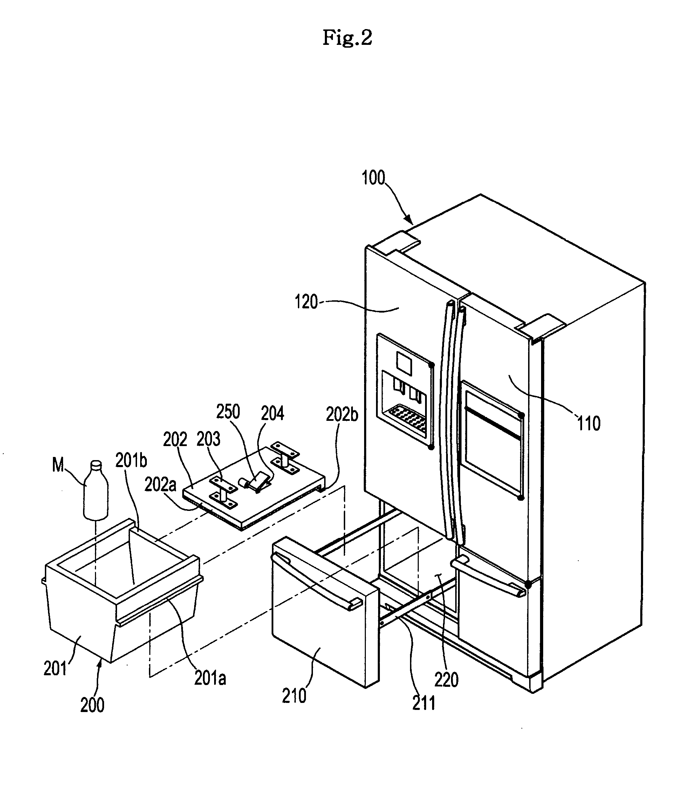

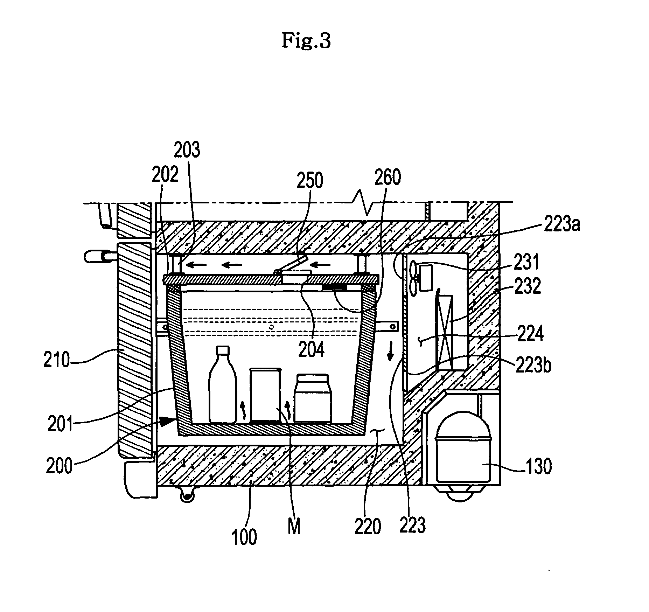

FIG. 1 is a conceptual diagram illustrating characteristics of a supercooling apparatus in accordance with the invention, and FIG. 2 is a perspective view illustrating one example of a refrigerator which includes the supercooling apparatus in accordance with the invention. FIGS. 3 to 5 are side views illustrating first, second and third embodiments of a main component of the refrigerator in accordance with the present invention, respectively.

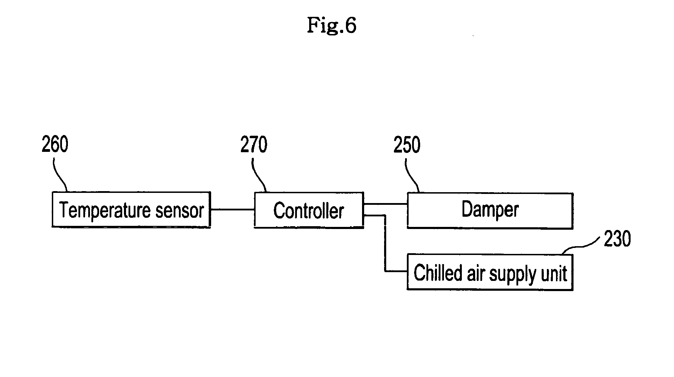

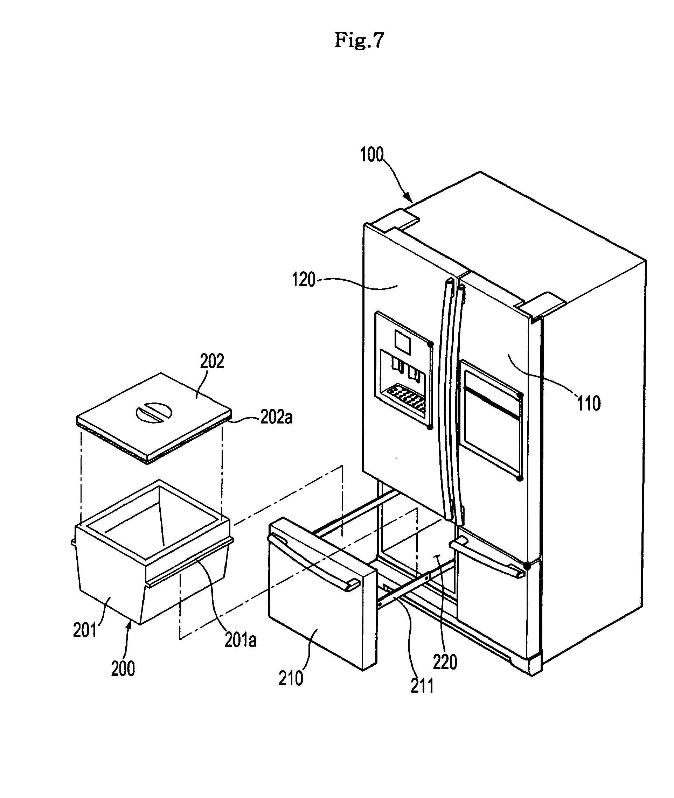

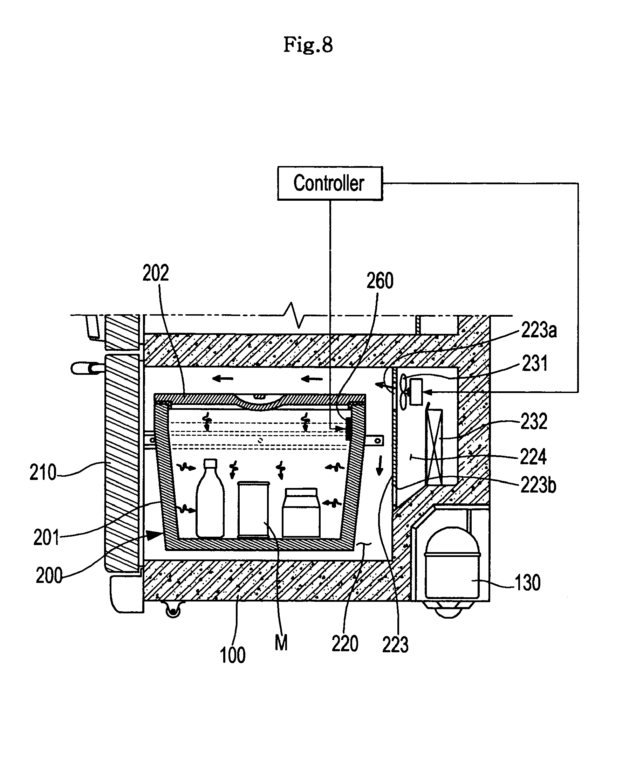

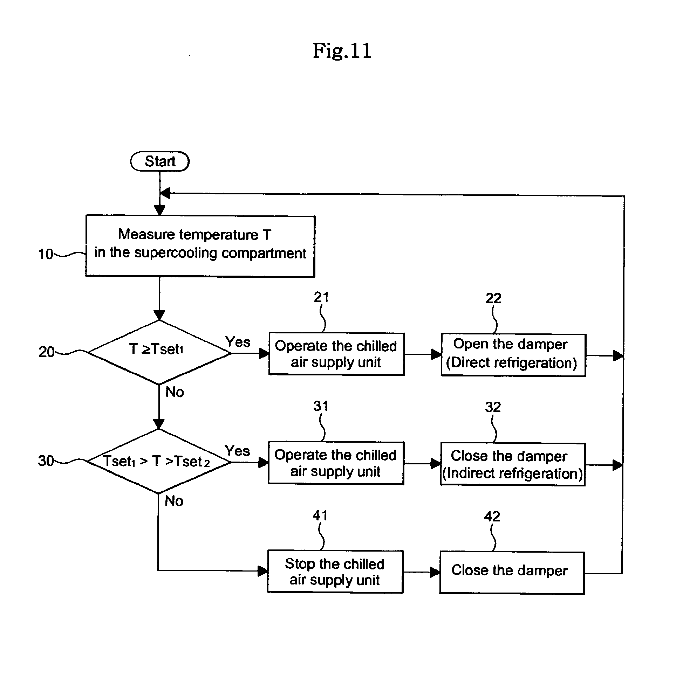

FIG 6 is a block diagram illustrating a control system of the refrigerator in accordance with the present invention shown in FIGS. 3 to 5. FIG. 7 is a perspective view illustrating another example of a refrigerator in accordance with the present invention, FIGS. 8 to 10 are side views illustrating fourth, fifth and sixth embodiments of a main component of the refrigerator in accordance with the present invention shown in FIG. 7, respectively, and FIG. 11 is a flow diagram illustrating a method for controlling a refrigerator in accordance with the present invention.

As shown in FIG. 1, the supercooling apparatus of the present invention includes a body 100, a heat insulation storage 220 having a predetermined size within the body 100, and a supercooling compartment 200 within the heat insulation storage 220. The supercooling apparatus further includes a fan 231 as one component of a chilled air supply unit to supply chilled air into the storage 220. Here, the chilled air may be supplied from a separate device.

The supercooling compartment 200 acts as a kind of indirect refrigeration means, and is formed of a material having a large thermal capacity. Thus, the supercooling compartment 200 is refrigerated by itself while chilled air is supplied thereto, and indirectly refrigerates an object M located therein. The supercooling compartment 200 may include any structure or device, which allows indirect thermal transfer via a certain media while preventing the chilled air supplied to the storage 200 from being directly supplied to the object M. Since it has a very large thermal capacity, the supercooling compartment 200 is likely to be maintained in a chilled state, and absorbs heat from the object (or transfers cold heat to the object), thereby refrigerating the object at a constant rate. That is, the supercooling compartment 200 performs the indirect refrigeration of the object M via heat transfer between the object M and the supercooling compartment 200. Here, it is possible to adjust an amount of heat transferred between the object M and the supercooling compartment 200 with the thickness or the dimensions of the supercooling compartment 200.

In addition, the supercooling compartment 200 is formed with a hole 204 through which the chilled air freely flows into or from the supercooling compartment 200 in order to directly supply the chilled air to the object M. A damper 250 is positioned on the supercooling compartment 200 to adjust an amount of chilled air flowing into or from the supercooling compartment 200 by opening or closing the hole 204.

The supercooling compartment 200 is provided with a temperature sensor 260 therein to detect a temperature of the supercooling compartment 200. The damper 250, the temperature sensor 260, and the fan 231 are connected with a controller 270, so that the controller 270 controls the fan 231 and the damper 250 based on temperature information sent from the temperature sensor 260 to maintain the supercooling compartment 200 at a constant temperature. That is, the controller 270 serves to enable the object M to be maintained in the supercooled state by reducing temperature variation within the supercooling compartment 200.

In addition, the storage 220 is formed with an air communication hole 223b which communicates the storage 220 with the outside in order to prevent flow of the chilled air into the storage 220 from being stopped due to an increase in pressure of the storage 220 which can occur when the chilled air is continuously supplied to the storage 220. Thus, it is possible to adjust the pressure of the storage 220 by means of the air communication hole 223b.

Embodiments of a refrigerator including the supercooling apparatus according to the invention will be described in detail with reference to FIGS. 2 to 4.

The refrigerator according to the invention has a body 100 constituted by an inner liner and an outer liner, between which a heat insulation material is filled. The refrigerator includes a refrigeration cycle constituted by a compressor, a condenser, an evaporator and a fan, and other essential components. A detailed description of the general components is omitted hereinafter for clarity.

Although the refrigerator is illustrated in FIG. 2 as having a drawer type door 210 to open or close a storage 220 of an independent supercooling apparatus, the present invention is not limited to this structure. Alternatively, the storage 220 may be provided with a hinge type door hingably attached to one side, an upper or lower side of an opening of the storage 220. In the structure wherein the drawer type door 210 is provided to the storage 220 such that the supercooling compartment 200 is received in the storage 220 as shown in FIG. 2, the door 210 is provided with a supporting member 211 to support the supercooling compartment 200 at the door 210 side while allowing the door 210 to slidably open or close the storage 220.

The supercooling compartment 200 includes a case 201 having a predetermined receiving space defined therein, and a cover 202 to open or close an opening of the case 201. The cover 202 is fixed to an upper surface inside the storage 220 by a fixing member 203, and includes a sealing member 202a to seal the space of the case 201 together with the case 201. The sealing member 202a engages with an inner surface of the opening of the case 201 in a sliding manner. At this time, the cover 202 is formed at one end with a step 202b to engage with a groove 201 b formed at one end of the opening of the case 201. The supercooling compartment further includes a protrusion 201 a formed on the side of the supercooling compartment 200 to be slidably inserted into the supporting member 211.

With the structure as described above, the cover 202 is fixed to the upper surface inside the storage 220, and the case 201 is supported by the supporting member 211 fixed to the door 210, so that when the door 210 is open, the case 201 is withdrawn to the outside of the storage 220, and when the door 210 is closed, the case 201 enters the storage 220. Here, when the case 201 is engaged with the cover 202 in the sliding manner, it is received in the storage 220.

Meanwhile, the cover 202 is formed with a hole 204 to allow chilled air supplied into the storage 220 to flow in or flow from the supercooling compartment 200, thereby enabling direct refrigeration of an object M, and with a damper 250 to control flow of the chilled air thereto or therefrom by opening or closing the hole 204, thereby allowing control of the direct refrigeration of the object M. The cover 202 is further provided with a temperature sensor 260 to measure the temperature of the object M by detecting surrounding temperature.

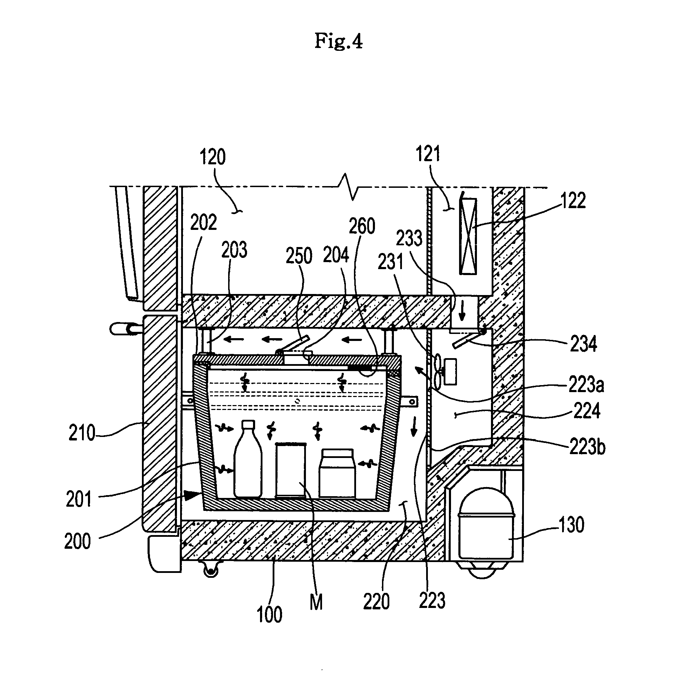

FIG. 3 shows a refrigerator according to a first embodiment, which includes a separate evaporator 232, and a separate fan 231 in order to control the supercooling apparatus independently of a freezing compartment or a refrigerating compartment. FIGS. 3 and 4 show the structure wherein the chilled air is supplied from a freezing compartment 120 to the storage 220 via a duct 233 and the fan 231. Here, the freezing compartment 120 is provided with a freezing air supply unit 121 which includes an evaporator 122 for the freezing compartment. Specifically, FIG. 3 shows the structure wherein the duct 233 serving to guide the chilled air to the storage 220 is communicated with the freezing compartment 120 such that the chilled air is supplied from the freezing compartment 120 to the storage 220 via the duct 233. FIG. 4 shows the structure wherein the storage 220 is in direct communication with the freezing air supply unit 121 such that a portion of chilled air generated by the evaporator 122 for the freezing compartment is directly supplied to the storage 220.

First, the supercooling compartment will be described with reference to FIG. 2, which includes the separate evaporator and the fan to supply the chilled air independently. With a heat insulation material filled between an inner liner 221 and an outer liner 222, the inner liner 221 defines the storage 220 therein. The storage 220 includes a door 210 to open or close an opening of the storage 220, a supporting member 211 fixed to the door 210, and a supercooling compartment 200 held and supported by the supporting member 211.

The storage 220 is divided by a partition plate 223 to define a chilled air supply part 224 at a rear side. The chilled air supply part 224 is provided with a chilled air supply unit, which serves to supply the chilled air to the storage 220, and includes an evaporator 232 to generate chilled air, and a fan 231 to blow the chilled air generated by the evaporator 232.

In addition, the partition plate 223 is formed with a communication hole 223a near the fan 231 such that the chilled air generated from the chilled air supply part 224 is blown to the storage 220 via the communication hole 223a by the fan 231.

Meanwhile, the supercooling compartment 200 includes a cover 202 fixed to an upper surface inside the storage 220, and a case 201 engaging with the cover 202 in a sliding manner. The cover 202 is formed with a hole 204 through which the chilled air supplied from the chilled air supply part flows in or from the supercooling compartment 200, and with a damper 250 to open or close the hole 204. The cover 202 is further provided with a temperature sensor 260 to measure the temperature of the object M. The temperature sensor 260 may be positioned at any place in the supercooling compartment 200 or at an inner side of the storage 220. In some cases, the temperature sensor 260 may be positioned very closely to the object M to directly sense the temperature of the object M. In this regard, even though the temperature sensor is not positioned near the object M, it is possible to detect the temperature of the object M by compensation of the temperature. According to this embodiment, the temperature sensor 260 is realized as a component which can perform detection of an inner temperature of the supercooling compartment 200.

The supercooling compartment 200 shown in FIG. 3 may further include a temperature controller to control the temperature in order to ensure the supercooling compartment 200 is stably maintained at a constant temperature. The temperature controller adjusts the temperature of the supercooling compartment 200 by adjusting supply of the chilled air (which can be achieved by controlling the fan 231) or by adjusting flow of the chilled air. The supercooling compartment 200 may further include a refrigerant controller (not shown) to control inflow of a refrigerant into the evaporator 232 by directly controlling an electronic expansion valve (not shown) or a control valve (not shown) which manipulates a refrigerant pipe (not show) through which the refrigerant discharged from a compressor (not shown) flows.

Operation of the refrigerator shown in FIG. 3 will be described hereafter. First, with a beverage desired to be supercooled (i.e., object M) placed in the supercooling compartment 200, the damper 250 provided to the supercooling compartment 200 is opened by the controller while chilled air is supplied into the storage 220 via the communication hole 223a by the chilled air supply unit, so that some of the chilled air serves to lower the temperature of the supercooling compartment 200, maintaining the supercooling compartment 200 in a refrigerated state, and some of the chilled air serves to perform direct refrigeration of the object M after being induced into the supercooling compartment 200 via the hole 204.

Here, the temperature of the chilled air is a critical supercooling temperature or less. In other words, by directly bringing the chilled air of the critical supercooling temperature or less into contact with the object M, the object M can be rapidly refrigerated.

While the object M is directly refrigerated, the temperature sensor 260 measures the temperature of the object M, and sends it to the controller 270, which closes the damper 250 when the temperature of the object M reaches a preset temperature. Then, the object M is indirectly refrigerated by the supercooling compartment 200.

Since the supercooling compartment 200 undergoes radiation heat transfer to a constant temperature, the supercooling compartment 200 has little temperature variation, so that temperature constancy in the supercooling compartment 200 is maintained. Alternatively, the temperature constancy in the supercooling compartment 200 may be achieved by directly refrigerating the object M for a predetermined period of time without using the temperature sensor 260, followed by then closing the damper 250 by the controller 270 after that period of time.

However, irrespective of the temperature constancy in the supercooling compartment 200, if the object M is placed for a long period of time therein, continuous supply of the chilled air causes the temperature of the supercooling compartment 200 to be significantly lowered, so that the indirect refrigeration by the supercooling compartment 200 can be performed at a significantly lowered temperature, causing the object M to be changed in phase from a supercooled state to a frozen state. In this case, after detecting the temperature in the supercooling compartment 200, the temperature sensor 260 sends information of the temperature to the controller 270. Then, the controller 270 determines whether the detected temperature of the supercooling compartment 200 is close to the critical supercooling temperature. If it is determined that the temperature of the supercooling compartment 200 is close to the critical supercooling temperature, the controller 270 stops supply of the chilled air into the storage 220, and closes the damper 250 if it is opened.

Stopping the supply of the chilled air can be achieved by stopping operation of the fan 231 in the chilled air supply part 224. More preferably, an opening and closing member (not shown) is provided to the communication hole 223a through which the chilled air flows into the storage 220 from the chilled air supply part 224 via the fan 231, such that the opening and closing member closes the communication hole 223a at the same time when the fan 231 is stopped.

Meanwhile, the partition plate 223 is formed with an air flow hole 223b which communicates the storage 220 with the chilled air supply part 224 to adjust pressure difference therebetween.

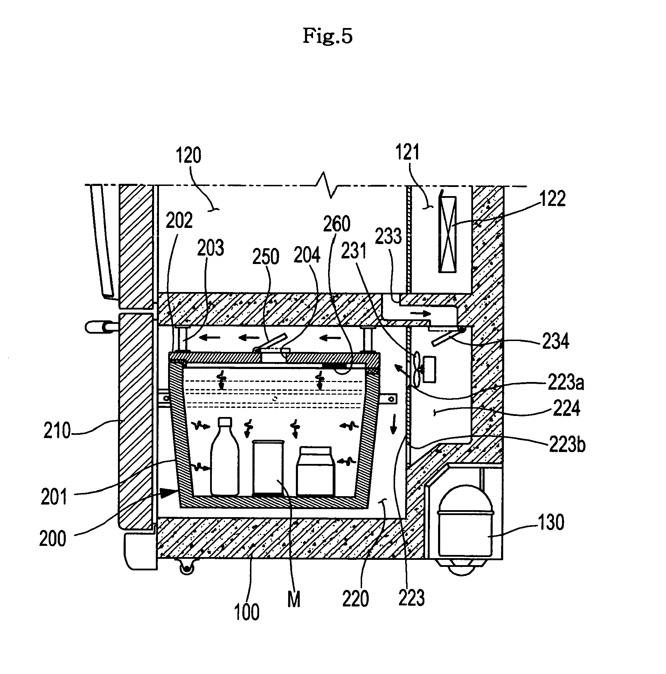

Second and third embodiments of the present invention will be described with reference to FIGS. 4 and 5. The main components of the second embodiment shown in FIG. 4 are the same as those of the first embodiment shown in FIG. 3 except for a chilled air supply unit. Referring to FIG. 4, the refrigerator of the embodiment includes a supercooling compartment 200 which employs chilled air supplied from a freezing chilled air supply part 121 instead of including the separate chilled air supply unit. Specifically, the refrigerator includes a freezing chilled air supply part 121 in which an evaporator 122 for the freezing compartment is positioned to generate chilled air which will be supplied to the freezing compartment 120, and a duct 233 which communicates the freezing chilled air supply part 121 with a chilled air supply part 224 of the refrigerator such that the chilled air is supplied from the freezing chilled air supply part 121 to the supercooling compartment 200 through the duct 233 by a fan 231. Referring to FIG. 5, the refrigerator of the embodiment includes a supercooling compartment 200 which employs chilled air supplied from a freezing compartment 120, and a duct 233 which communicates the freezing compartment 120 with the chilled air supply part 224. The chilled air is supplied from the freezing compartment 120 to the supercooling compartment 200 through the duct 233 by a fan 231.

As in the first embodiment shown in FIG. 3, the second and third embodiments shown in FIGS. 4 and 5 include a partition plate 223, which divides the storage 220 and the chilled air supply part 224, and which is formed with a communication hole 223a through which the storage 220 communicates with the chilled air supply part 224. Thus, the chilled air having flown through the duct 233 can be supplied to the storage 220 via the communication hole 223a by the fan 231.

Meanwhile, in the third embodiment shown in FIG. 5, a duct 233 is provided to communicate the freezing compartment 120 with the chilled air supply part 224. Thus, instead of inducing the chilled air from the freezing chilled air supply part 121, this embodiment induces the chilled air from the freezing compartment 120 into the storage 220.

In the embodiments shown in FIGS. 4 and 5, stopping the supply of the chilled air into the storage 220 is achieved by stopping operation of the fan 231. The duct 233 may be provided with an opening and closing member 234 to open or close an inlet or an outlet of the duct 233 such that the opening and closing member closes the duct 233 at the same time when the fan 231 is stopped. Alternatively, the opening and closing member 234 may be provided to open or close the communication hole 223a for the same function instead of opening or closing the duct 233.

Meanwhile, the partition plate 223 is further formed with an air flow hole 223b which communicates the storage 220 with the chilled air supply part 224 to adjust pressure difference therebetween.

FIG. 6 is a block diagram illustrating a control system of the refrigerator in accordance with the first to third embodiments respectively shown in FIGS. 2 to 5, in which direct refrigeration or indirect refrigeration of an object M is performed by controlling the damper 250 according to temperature information provided by the temperature sensor 260, and inflow of the chilled air into the supercooling compartment 200 is controlled by controlling the chilled air supply unit 230, more specifically, the fan.

Meanwhile, refrigerators shown in FIGS. 7 to 10 have the structure which performs only indirect refrigeration of the object M without performing direct refrigeration of the object M, and includes a device to adjust inflow of chilled air in order to maintain a supercooled state of the object M.

Referring to FIG. 8, a refrigeration according to a fourth embodiment of the invention includes a body 100 defining an overall appearance of the refrigerator, a refrigerating compartment 110 and a freezing compartment 120 defined in the body 100, and a storage 220 independent of the refrigerating compartment 110 and the freezing compartment 120. The storage 220 has a supercooling compartment 200 defined therein and formed of a material having a large heat capacity.

Although the refrigerator is illustrated in FIG. 8 as having a drawer type door 210 to open or close the storage 220, the present invention is not limited to this structure. Alternatively, the storage 220 may be provided with a hinge type door hingably attached to one side, an upper or lower side of an opening of the storage 220. In the structure wherein the drawer type door 210 is provided to the storage 220 such that the supercooling compartment 200 is received in the storage 220 as shown in FIG. 8, the door 210 is provided with a supporting member 211 to support the supercooling compartment 200 at the door 210 side while allowing the door 220 to slidably open or close the storage 220.

The supercooling compartment 200 includes a case 201 having a predetermined receiving space defined therein, and a cover 202 to close an opening of the case 201. The cover 202 is provided therearound with a sealing member 202a to seal the space of the case 201 together with the case 201.

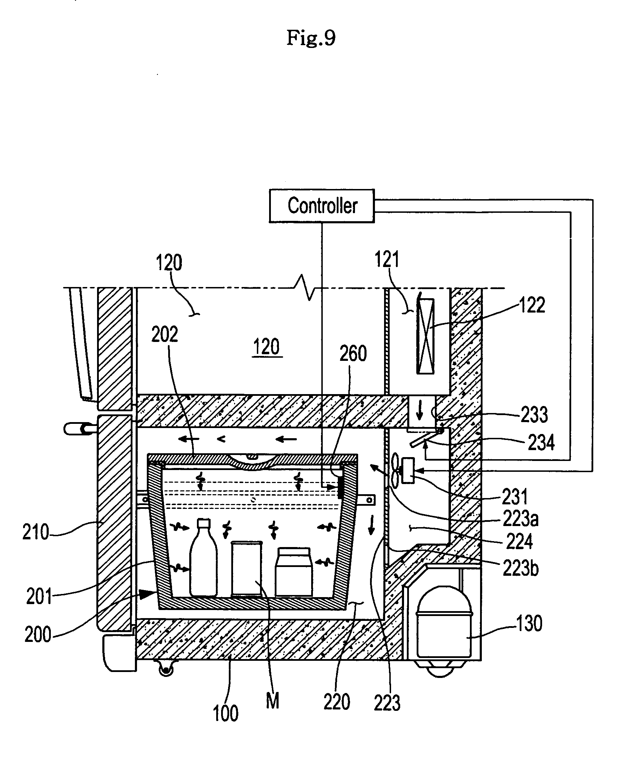

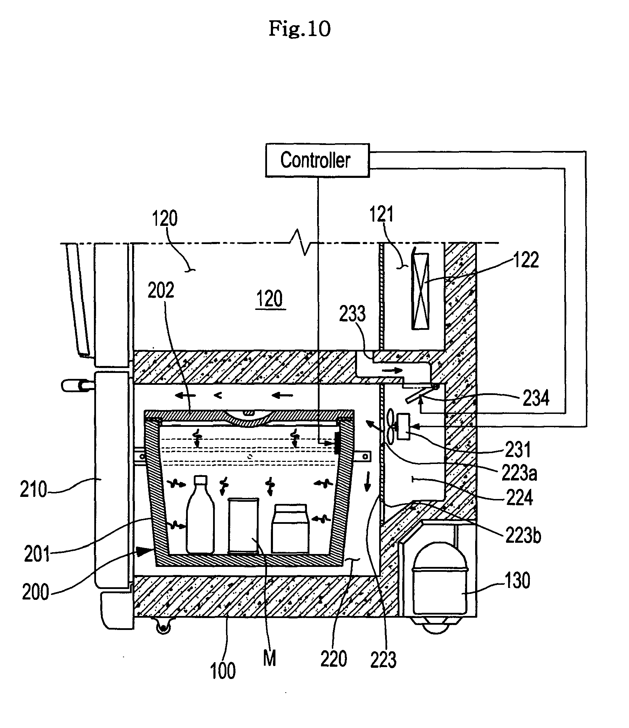

Unlike the embodiment shown in FIG. 8, FIGS. 9 and 10 show the structure wherein chilled air is supplied to the storage 220 by a fan 231 through a duct 233 which communicates the freezing compartment 120 with the chilled air supply part 224. In the embodiment shown in FIG 9, the refrigerator includes a supercooling compartment 200 which employs chilled air supplied from a freezing chilled air supply part 121 instead of including a separate chilled air supply unit. Specifically, the refrigerator includes a freezing chilled air supply part 121 in which an evaporator 122 for the freezing compartment is positioned to generate chilled air which is supplied to the freezing compartment 120, and a duct 233 which communicates the freezing chilled air supply part 121 with a chilled air supply part 224 such that the chilled air is supplied from the freezing chilled air supply part 121 to the supercooling compartment 200 through the duct 233 by a fan 231. Referring to FIG. 10, the refrigerator of the embodiment includes a supercooling compartment 200 which employs chilled air supplied from a freezing compartment 120, and a duct 233 which communicates the freezing compartment 120 with the chilled air supply part 224. The chilled air is supplied from the freezing compartment 120 to the supercooling compartment 200 through the duct 233 by a fan 231.

As in the embodiment shown in FIG. 8, the fifth and sixth embodiments shown in FIGS. 9 and 10 include a partition plate 223, which divides the storage 220 and the chilled air supply part 224, and which is formed with a communication hole 223a through which the storage 220 is communicated with the chilled air supply part 224. Thus, the chilled air having flown through the duct 233 can be supplied to the storage 220 via the communication hole 223a by the fan 231.

Meanwhile, in the embodiment shown in FIG. 10, a duct 233 is provided to communicate the freezing compartment 120 with the chilled air supply part 224. Thus, instead of inducing the chilled air from the freezing chilled air supply part 121, this embodiment induces the chilled air from the freezing compartment 120 into the storage 220.

In the embodiments shown in FIGS. 9 and 10, stopping the supply of the chilled air into the storage 220 is achieved by stopping operation of the fan 231. The duct 233 may be provided with an opening and closing member 234 to open or close an inlet or an outlet of the duct 233 such that the opening and closing member closes the duct 233 at the same time when the fan 231 is stopped.

Alternatively, the opening and closing member 234 may be provided to open or close the communication hole 223a for the same function instead of opening or closing the duct 233.

Meanwhile, in the refrigerator shown in FIGS. 8 to 10, the partition plate 223 is further formed with an air flow hole 223b which communicates the storage 220 with the chilled air supply part 224 to adjust pressure difference therebetween.

FIG. 11 is a flow diagram illustrating a method for controlling a refrigerator in accordance with the present invention, by which direct refrigeration and indirect refrigeration of the object M are selectively performed in the embodiments shown in FIGS. 3 to 5.

With a supercooling compartment received in a storage to which chilled air is supplied, a temperature sensor detects an inner temperature of the supercooling compartment in which an object is placed, and sends information about the inner temperature to a controller (10). Here, a detected inner temperature of the supercooling compartment will hereinafter be referred to as "T".

Meanwhile, preset temperatures are previously input to the controller, and are defined as a first preset temperature Tset1 and a second preset temperature Tset2. As described above, the first preset temperature Tset1 means a temperature of the object when the indirect refrigeration of the object is started after the object is rapidly refrigerated by the direct refrigeration, and is previously set in the controller. Preferably, the first preset temperature Tset1 is about 0 °C .

The second preset temperature Tset2 is a temperature higher than a critical supercooling temperature of the object and equal to or slightly greater than a target temperature of the object. Preferably, the second preset temperature Tset2 is the target temperature of the object, and is previously set in the controller. In this regard, according to a test result, it is necessary to determine the second preset temperature Tset2 as a temperature which can maintain a supercooled state of a beverage. Preferably, the second preset temperature Tset2 is about -7 °C.

With determination of whether or not the detected temperature T is greater than or equal to the first preset temperature Tset1, if it is determined that the detected temperature T is greater than or equal to the first preset temperature Tset1, the controller operates a chilled air supply unit to supply chilled air into the storage (21), and allows the object within the supercooling compartment to be directly refrigerated by the chilled air by opening a damper of the supercooling compartment (22).

If it is determined that the detected temperature T is between the first preset temperature Tset1 and the second preset temperature Tset2, the controller operates the chilled air supply unit to supply the chilled air to the storage (31), and allows the object in the supercooling compartment to be indirectly refrigerated by closing the damper (32).

If it is determined that the detected temperature T is less than the second preset temperature Tset2, the controller stops the chilled air supply unit to block supply of the chilled air into the storage (41), and closes the damper (42).

In other words, the method of the present invention is characterized in that the object can be rapidly refrigerated to the supercooled state within the supercooling compartment, and when the object reaches the supercooled state, the temperature of the supercooling compartment is maintained by repeating the following operations; if the temperature T of the supercooling compartment detected by the temperature sensor is higher than the first preset temperature Tset1, the chilled air is supplied to the supercooling compartment while the damper is opened, so that the chilled air is directly supplied to, and directly refrigerates the object; if the temperature T is in the preset temperature range (Tset1 > T ≥ Tset2), the chilled air is supplied to the supercooling compartment while the damper is closed, so that the object is indirectly refrigerated by the supercooling compartment; and if the temperature T is lower than the preset temperature range (Tset1 - Tset2), supply of the chilled air is stopped while the damper is closed, so that the object is not refrigerated any more.

As apparent from the above description, the refrigerator according to the present invention can supercool a beverage without freezing the beverage in the supercooling compartment, and can significantly reduce temperature variation in the supercooling compartment for achieving temperature constancy thereof in order to stably maintain a supercooled state of the beverage, so that a supercooled beverage is very rapidly produced corresponding to user's demands while the temperature constancy is stably maintained within the supercooling compartment.

Although a few embodiments of the present invention have been shown and described, it would be appreciated by those skilled in the art that various modifications, additions and substitutions may be made in these embodiments without departing from the principle and spirit of the invention, the scope of which is defined in the claims and their equivalents.

## Claims

1. A supercooling apparatus, comprising:
a storage to which chilled air is supplied from a chilled air supply unit;
a supercooling compartment positioned in the storage, and refrigerated by the chilled air to refrigerate an object therein;
a hole formed at one side of the supercooling compartment to allow flow of the chilled air into and from the inside of the supercooling compartment; and
a damper to open or close the hole,
wherein the object in the supercooling compartment is directly or indirectly refrigerated selectively by the damper opening or closing the hole.

2. The apparatus according to claim 1, further comprising a temperature sensor positioned inside the supercooling compartment to detect an inner temperature of the supercooling compartment.

3. The apparatus according to claim 2, further comprising a controller to operate the supercooling compartment in any one of a direct refrigeration mode, an indirect refrigeration mode and a refrigeration stop mode by controlling the damper and the chilled air supply unit based on a temperature information provided by the temperature sensor

4. The apparatus according to claim 1, wherein the supercooling compartment is formed of a material to accumulate cold heat to maintain a constant temperature.

5. The apparatus according to claim 1, wherein the chilled air supply unit comprises an evaporator to generate the chilled air, and a fan to blow the chilled air generated by the evaporator to the storage.

6. The apparatus according to claim 5, wherein the evaporator is any one of an evaporator for a freezing compartment, an evaporator for a refrigerating compartment, and an independent evaporator.

7. A refrigerator comprising:
a body having a freezing compartment defined therein;
a storage defined independently of the freezing compartment in the body;
a supercooling compartment positioned in the storage to indirectly refrigerate an object therein;
a chilled air supply unit to supply chilled air from the freezing compartment to the storage;
a hole formed at one side of the supercooling compartment to allow flow of the chilled air into and from the inside of the supercooling compartment; and
a damper to open or close the hole,
wherein the object in the supercooling compartment is directly or indirectly refrigerated selectively by the damper opening or closing the hole.

8. The refrigerator according to claim 7, further comprising a temperature sensor positioned inside the supercooling compartment to detect an inner temperature of the supercooling compartment.

9. The refrigerator according to claim 8, further comprising a controller to operate the supercooling compartment in any one of a direct refrigeration mode, an indirect refrigeration mode and a refrigeration stop mode by controlling the damper and the chilled air supply unit based on a temperature information provided by the temperature sensor.

10. The refrigerator according to claim 7, wherein the supercooling compartment is formed of a material to accumulate cold heat to maintain a constant temperature.

11. The refrigerator according to claim 7, further comprising a duct to guide the chilled air from the freezing compartment to the storage.

12. The refrigerator according to claim 11, wherein the chilled air supply unit comprises an opening and closing member to open or close the duct, and a fan to blow the chilled air from the freezing compartment to the storage.

13. The refrigerator according to claim 7, wherein the supercooling compartment comprises a case to define a space in which the object is preserved, and a cover to open or close an opening of the case.

14. The refrigerator according to claim 13, wherein the hole and the damper are provided on the cover.

15. The refrigerator according to claim 13, wherein the supercooling compartment further comprises a fixing member to fix the cover to one side within the storage.

16. The refrigerator according to claim 15, wherein the cover slides on the opening of the case, and is disengaged from or engaged with the case when the cover is withdrawn from or pushed into the case.

17. The refrigerator according to claim 16, wherein the supercooling compartment further comprises a sealing member provided around a lower end of the cover or on an inner surface of the opening of the case to seal the opening of the case when the cover is slidably engaged with the case.

18. The refrigerator according to claim 16, wherein the opening of the case is provided at one end with a groove in which one end of the cover slidably fits, and the cover is provided at the other end with a step corresponding to the groove of the case such that the case is closed when the cover is slidably engaged with the case.

19. A refrigerator, comprising:
a body having a freezing compartment defined therein;
a storage defined independently of the freezing compartment in the body;
a chilled air supply unit to supply chilled air from the freezing compartment to the storage;
a supercooling compartment positioned in the storage, and refrigerated by the chilled air supplied from the chilled air supply unit to refrigerate an object therein;
a temperature sensor positioned inside the supercooling compartment to detect an inner temperature of the supercooling compartment; and
a controller to control the chilled air supply unit based on a temperature information provided by the temperature sensor,
wherein the refrigerator maintains a supercooled state of the object by reducing a range of temperature variation within the supercooling compartment via control of the chilled air supplied from the chilled air supply unit.

20. The refrigerator according to claim 19, wherein the supercooling compartment is formed of a material to accumulate cold heat to maintain a constant temperature.

21. The refrigerator according to claim 19, wherein the chilled air supply unit comprises an evaporator to generate the chilled air, and a fan to blow the chilled air generated by the evaporator to the storage.

22. The refrigerator according to claim 21, wherein the evaporator comprises any one of an evaporator for a freezing compartment, an evaporator for a refrigerating compartment, and an independent evaporator.

23. The refrigerator according to claim 19, further comprising a duct to guide the chilled air from the freezing compartment to the storage.

24. The refrigerator according to claim 23, wherein the chilled air supply unit comprises an opening and closing member to open or close the duct, and a fan to blow the chilled air from the freezing compartment to the storage.

25. The refrigerator according to claim 19, wherein the supercooling compartment comprises a case to define a space in which the object is preserved, and a cover to open or close an opening of the case.

26. A method for controlling a refrigerator, comprising:
A) detecting a temperature T in a supercooling compartment;
B) comparing the temperature T with at least one of a first preset temperature Tset1 set as a temperature of starting indirect refrigeration of an object after direct refrigeration, and with a second preset temperature Tset2 set as a target temperature; and
C) controlling a chilled air supply unit acting to supply chilled air to a storage in which the supercooling compartment is provided, and a damper acting to adjust flow of the chilled air from the storage to the supercooling compartment according to the temperature T in the supercooling compartment, such that the direct refrigeration or the indirect refrigeration of the object within the supercooling compartment is selectively performed.

27. The method according to claim 26, wherein, if it is determined at the comparing operation B) that the temperature T is greater than or equal to the first preset temperature Tset1, the controlling operation C) is performed to operate the chilled air supply unit while opening the damper.

28. The method according to claim 26, wherein, if it is determined at the comparing operation B) that the temperature T is in the range of Tset1 ~ Tset2, the controlling operation C) is performed to operate the chilled air supply unit while closing the damper.

29. The method according to claim 26, wherein, if it is determined at the comparing operation B) that the temperature T is less than the second preset temperature Tset2, the controlling operation C) is performed to stop the chilled air supply unit while closing the damper.
